**Europäisches Patentamt**

**European Patent Office**

**Office européen des brevets**

(19)

(11)  **EP 1 531 028 A2**

(12)  **EUROPEAN PATENT APPLICATION**

(43) Date of publication:
**18.05.2005 Bulletin 2005/20**

(51) Int Cl.⁷: **B25J 9/16**, G05B 19/425

(21) Application number: **04257034.1**

(22) Date of filing: **12.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventors:<br>• **Watanabe, Atsushi,**<br>  **Room 109, Lifepatiohamadayama**<br>  **Tokyo 168-0072 (JP)**<br>• **Oumi, Tatsuya,**<br>  **Room 12-603 Fanuc Manshonharimomi**<br>  **Minamitsuru-gun Yamanashi 401-0511 (JP)** |
| (30) Priority: **13.11.2003 JP 2003384102** | |
| (71) Applicant: **FANUC LTD**<br>**Minamitsuru-gun, Yamanashi 401-0597 (JP)** | (74) Representative: **Billington, Lawrence Emlyn et al**<br>**Haseltine Lake,**<br>**Imperial House,**<br>**15-19 Kingsway**<br>**London WC2B 6UD (GB)** |

(54)  **Robot operation program modification device**

(57)    An operation program modification device for a robot that is made efficient in positional modification of a cluster of taught points in a comer segment and the like. Sequential N taught points A1 through A6 to be grouped are designated, and the operator executes the operation of positional modification of an intermediate taught point A4. A modification vector for modifying A4 into B4 is calculated. Taught points A2, A3 and A5 located in between the taught point A4 and end points A1 and A6 are grouped into first-region taught points A2 and A3 and a second-region taught point A4. The required modification amounts of the taught points A2, A3 and A5 are calculated by prorating the modification vector according to distance (path distance or straight-line distance) from the end point A1 or A6 to be modified into taught points B2, B3 and B5, respectively. The modification vector may be set to correspond to a modified taught point of a user selection. It is possible to perform necessary input from a teaching operation panel instead of utilising an offline programming system using a personal computer.

FIG.3a

EP 1 531 028 A2

FIG.3b

FIG.3c

**Description**

BACKGROUND OF THE INVENTION

1. Field of the Invention

The present invention relates to a technology for modifying an operation program for a robot, and more specifically to a technology for modifying taught point data in the operation program.

2. Description of Related Art

As is well known, an operation program for a robot includes data of taught points, and an operation path defined by these taught points is called a taught path. When alternation of the taught path is required, the taught path is altered by modifying each position data of the taught points at a part of the taught path to be altered. In altering a corner part, for instance, of the taught path, it is often required to modify a plurality of taught points including those adjacent to the corner part. This arises a problem that it takes much time for the work of modification. Any specific effective proposal or suggestion to counter this problem is found in prior art documents.

SUMMARY OF THE INVENTION

The present invention provides an operation program modification device capable of efficiently and rationally modifying a sequence of taught points which define an operation path at a comer, for instance, in the operation program. The present invention enables automatic modification of taught points other than one taught point which is modified by an operator in a sequence of taught points in the operation program.

An operation program modification device of the present invention comprises the following means (a)-(i):

(a) means for designating at least four sequential taught points among taught points set in the operation program;

(b) means for modifying a position of one taught point other than a first taught point and a last taught point in an operation path defined by the sequential taught points;

(c) means for obtaining a modification vector representing the modification of position of the one taught point;

(d) means for obtaining first distance information from the first taught point to the one taught point before modification in a case where there exists one or more first-region taught points in a first region from the first taught point to the one taught point;

(e) means for obtaining second distance information from the first taught point to each of the first-region taught points along the operation path in the case where there exists one or more first-region taught points;

(f) means for modifying a position of each of the first-region taught points based on the modification vector, the first distance information and the second distance information in the case where there exists one or more first-region taught points;

(g) means for obtaining third distance information between the position of the one taught point before modification and a last taught point along the operation path in a case where there exists one or more second-region taught points in a second region from the one taught point to the last taught point;

(h) means for obtaining fourth distance information between each of the second-region taught points and the last taught point in the case where there exists one or more second-region taught points; and

(i) means for modifying a position of each of the second-region taught points based on the modification vector, the third distance information and the fourth distance information in the case where there exists one or more second-region taught points.

According to another aspect of the present invention, the following means (j) and (k) may be utilized in place of the means (b) and (c) in the above means (a)-(i).

(j) means for setting a modification vector;

(k) means for modifying a position of one taught point other than a first taught point and a last taught point in the sequential taught points, according to the modification vector.

At least one of the first distance information, the second distance information, the third distance information and the fourth distance information may be obtained as a sum of distances between adjacent taught points from the first taught point to the one taught point before modification, as a sum of distances between adjacent taught points from the first taught point to each of the first-region taught points, as a sum of distances between adjacent taught points from the one taught point before modification to the final taught point, and as a sum of distances between adjacent taught points from each of the second-region taught points to the final taught point, respectively.

Further, at least one of the first distance information, the second distance information, the third distance information and the fourth distance information is obtained as a distance from the first taught point to the one taught point before modification, as a distance from the first taught point to each of the first-region taught points, as a distance from the final taught point to the one taught point before modification, as a distance from each of the second-region taught points to the final taught point, respectively.

With the above arrangements, it becomes possible to easily perform the modification of a plurality of taught points required to be modified in the taught path of a corner portion, etc. to thereby shorten time required for the modification of the operation program of the robot. Moreover, it is also possible to reduce the operator's burden inevitable in determining a modification amount of each taught point, so that even an operator not having much skill can make the modification without difficulty.

Especially, for instance in the case of application of arc welding in which there often exists a large number of taught points located in a corner part, the work for taught path modification, which is required when a welding line deviates from a line where it should be due to a centrifugal force or the like, is remarkably simplified.

## BRIEF DESCRIPTION OF THE DRAWINGS

FIG. 1a is a view showing a personal computer used with a program modification device in first and second embodiments of the present invention, FIG. 1b is a block diagram showing the outline of a construction thereof;

FIG. 2 is a flowchart showing the outline of a procedure of taught position modification that is executed in the first embodiment;

FIG. 3a is a view showing an example of grouped taught points, FIG. 3b is a view showing an example of modification made by an operator with respect to intermediate taught points thereamong, FIG. 3c is a view exemplifying a position of each taught point after the taught position modification is completed;

FIG. 4 is a flowchart showing the outline of a procedure of taught position modification that is executed in the second embodiment; and

FIG. 5 is a view showing a schematic construction in case that necessary input is carried out by using a teaching operation panel in place of a personal computer.

## DETAILED DESCRIPTION

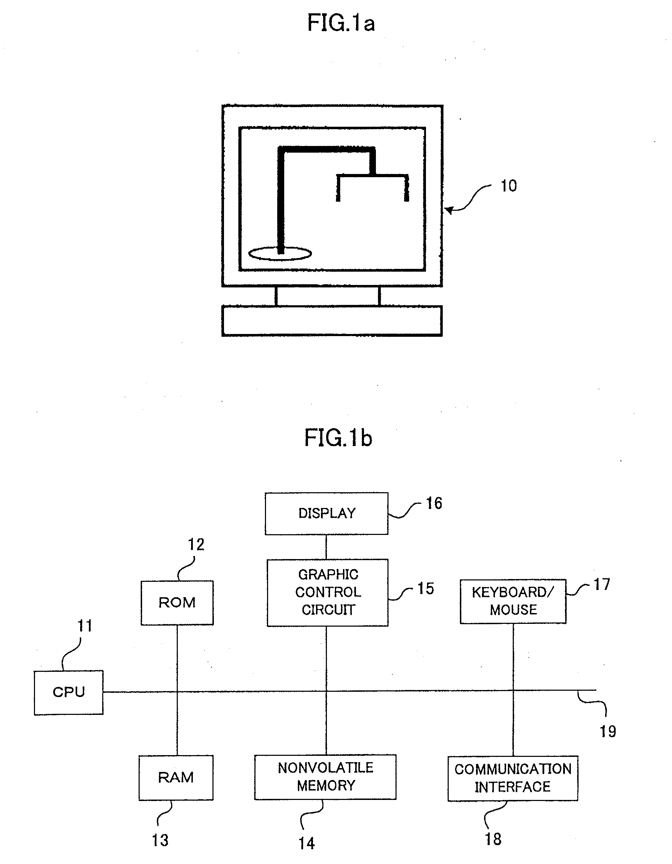

Several embodiments of the present invention will be described below. First of all, a first embodiment will be explained with reference to FIGS. 1 through 3. According to the first embodiment, an offline programming system prepared on a personal computer 10 (see FIG. 1a) is used as a taught point modification device. FIG. 1b shows the outline of a block configuration of the system. As shown in the same drawing, the system comprises a CPU 11, memories (a ROM 12, a RAM 13 and a nonvolatile memory 14) connected to a bus line 19 of the CPU, a graphic control circuit 15, a keyboard/ mouse 17 (manual input device) and a communication interface 18, and a display 16 (e.g. a liquid crystal display, a CRT) connected to the graphic control circuit 15.

Although not shown, an input/output device and the like for giving and receiving data from external devices, such as a printer and a personal computer, are provided as needed.

The memories include various data used in the offline programming. Moreover, there are stored programs, various setting values, and the like, for arranging various objects on a screen, which is defined for example by a three-dimensional model, by operating the graphic control circuit, and for showing a taught path indicated by a taught program of a robot under creation or in the process of creation, a position of a taught point and the like, on a display. There is further installed software for storing modified taught position data by dragging a designated taught point on the screen by means of a mouse and moving the taught point to a desired modified position.

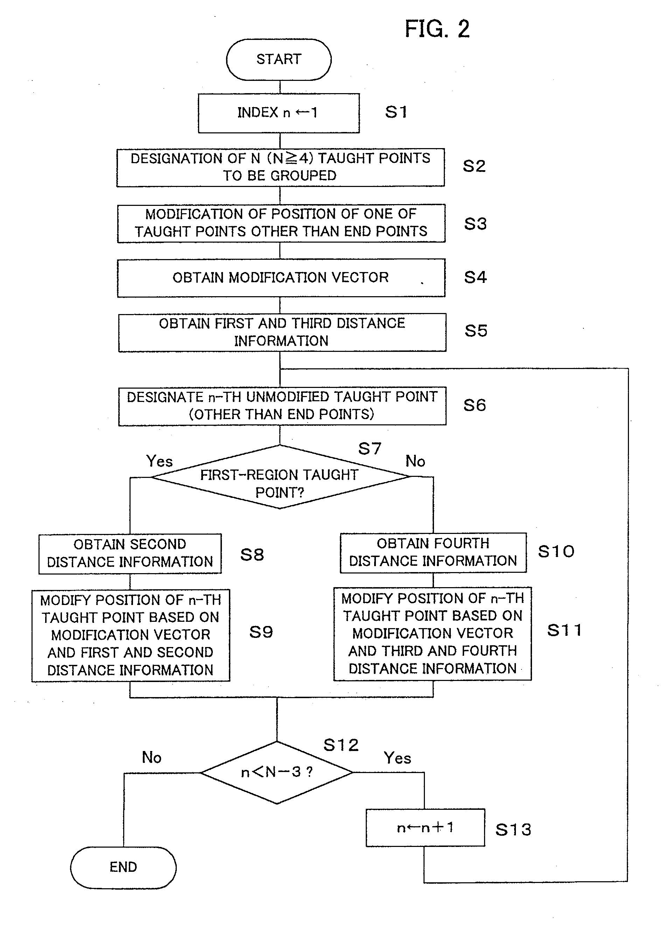

The above-described constructions and functions are not particularly different from conventional systems. Additionally in the present embodiment, software for executing a taught position modification in the process shown in a flowchart of FIG. 2 is installed. The point of each step is described below.

Step S1; an index n is initialized into n=1. The index n indicates what number a taught point is in the taught points subjected to automatic modification.

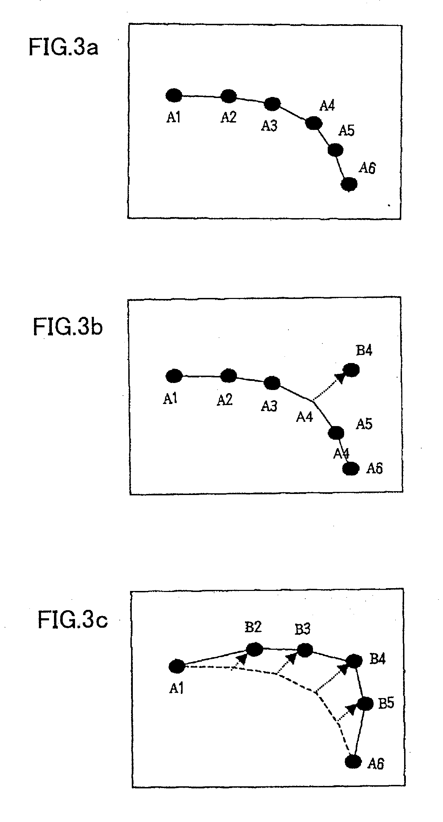

Step S2; N sequential taught points to be grouped are designated. Herein, N is an integral number that satisfies N≥4, and the designation is performed by an operator (a user) on the screen, for example, using the mouse or the keyboard. As an example, a case in which six taught points A1 through A6 shown in FIG. 3a are designated will be considered here. Such grouping is generally carried out with respect to a cluster of taught points located in a path portion that passes a corner segment, like the example shown in FIG. 3a. Apart from a corner segment, however, the grouping is effective in cases where smooth modification is required in respect to a plurality of sequential taught points.

Step S3; An appropriate taught point is selected among N-2 taught points other than end points in the N grouped taught points, to thereby make positional modification. That is, the operator designates one taught point on the screen by means of the mouse and drags the taught point to a desired modified position to determine a modified taught position. In the above example, the taught point A4 is selected among the six taught points A1 through A6 shown in FIG. 3 a to be modified into a taught point B4 shown in FIG. 3b.

Step S4; A vector (modification vector) indicative of the modification in Step S3 is calculated. The calculation is automatically carried out in the system. According to the above example, a vector $\Delta$ indicative of the modification of the taught point A4 into the taught point B4 is calculated. The modification vector $\Delta$ can be expressed as described below.

$$\Delta=(\Delta x4, \Delta y4, \Delta z4)=(xb4-xa4, yb4-ya4, zb4-za4)$$

where a three-dimensional position of the taught point A4 is (xa4, ya4, za4), and that of the modified taught point B4 is (b4, yb4, zb4).

Additionally, since the display screen is two-dimensional, a proper condition is preliminarily set so that the three-dimensional position may be identified by point designation on the screen. The condition is, for example, that "the modified taught point B4 is located on a plane surmounted by the first taught point A1, a final taught point A6, and the unmodified taught point A4." If such a condition is set beforehand, the three-dimensional position (b4, yb4, zb4) of the modified taught point B4 is fixed through point designation on the screen, so that the modification vector is determined by the above equation.

Step S5; A path distance or a straight-line distance from the first taught point to the taught point selected in Step S3 is obtained as first distance information. Herein, the path distance means "a sum of distances between adjacent taught points from the first taught point to the taught point selected in Step S3, which is measured along the taught path." In the above example, first distance information D1 is expressed by the following equation.

D1=straight-line distance between the taught-points A1 and

A2+straight-line distance between the taught points A2 and A3+straight-line distance between the taught points A3 and A4

In the case that straight-line distance (represented by D1') is used, the first distance information is expressed as follows.

D1'=straight-line distance between the taught points A1 and A4

Furthermore, each term in the above equations is found by simple distance calculation on the basis of the three-dimensional position of each of the taught points.

In the same manner, a path distance or a straight-line distance from the taught point selected in Step S3 to the final taught point is found as third distance information.

D3=straight-line distance between the taught points A4 and

A5+straight-line distance between the taught points A5 and A6

D3'=straight-line distance between the taught points A4 and A6

The distance information D1 (or D1') and D3 (or D3') is used in calculation of modified position of an unmodified taught point afterwards.

Step S6; An n-th unmodified taught point is designated among taught points excluding both end points (the first taught point and the final taught point) and the taught point selected in Step S3. This designation can be automatically performed in the system. The operator, however, may perform the designation on the screen by using the mouse or the like. In the first case, a proper rule is preliminarily set. For example, it is satisfactory if a rule of selecting "a taught point closest to the first taught point on the taught path among taught points excluding both the end points (the first taught point and the final taught point) and the taught point selected in Step S3 from the series of grouped taught points" is preset.

In the case where the rule is applied to the above example, the taught point A2 is identified in the first Step S6. Thereafter, the taught points A3 and A5 are identified in the second and the third Step S6, respectively.

Step S7; it is judged in the system whether the taught point identified in Step S6 is a "first-region taught point" or a "second-region taught point".
Herein, the "first-region taught point" means a taught point located in a first region between the first taught point and the taught point selected in Step S3 on the taught path, and the "second-region taught point" means a taught point located in a second region between the taught point selected in Step S3 and the final taught point on the taught path.

The taught point identified in Step S6 is either the first-region taught point or the second-region taught point. Therefore, if the taught point identified in Step S6 is the first-region taught point, the procedure advances to Step S8. If not, the procedure advances to Step S10.

Step S8; A path distance or a straight-line distance from the first taught point to the taught point identified in Step S6 is calculated as second distance information.

Assuming that the path distance and the straight-line distance are denoted by D2 and D2', respectively, and applied to the above example, the following equations can be obtained.

(Process cycle in which the taught point A2 is identified in Step S6)

D2(12)=D2'(12)=straight-line distance between the taught points A1 and A2

(Process cycle in which the taught point A3 is identified in Step S6)

D2(13)=straight-line distance between the taught points A1 and

A2+straight-line distance between the taught points A2 and A3

D2'(13)=straight-line distance between the taught points A1 and A3

Step S9; based on the modification vector $\Delta$, the first distance information D1 (or D1') and the second distance information D2 (or D2'), the modified position of the taught point identified in Step S6 is calculated in the system. The equation is provided below.

Modified position=unmodified position+modification vector Δ*D2/D1 (or D2'/D1'). Depending on the circumstances, the following equation may be used.

Modified position=unmodified position+modification vector Δ*D2'/D1 (or D2/D1')

If the equation is applied to the above example, the following equations are obtained. Positions of A2, A3, B2 and B3 are expressed by (xa2, ya2, za2), (xa3, ya3, za3), (xb2, yb2, zb2), and (xb3, yb3, zb3), respectively, and the equation of each component will be described.

$$xb2=xa2+(\triangle x4*D2(12)/D1)$$

$$yb2=ya3+(\triangle y4*D2(12)/D1)$$

$$zb2=za3+(\triangle z4*D2(12)/D1)$$

$$xb3=xa3+(\triangle x4*D2(13)/D1)$$

$$yb3=ya2+(\triangle y4*D2(13)/D1)$$

$$zb3=za32+(\triangle z4*D2(13)/D1)$$

Herein, D1, D2(12), and D2(13) may be replaced by D1', D2'(12), and D2'(13), respectively.

Step S10; A path distance or a straight-line distance from the taught point identified in Step S6 to the final taught point is calculated as fourth distance information.

Assuming that the path distance and the straight-line distance are represented by D4 and D4', respectively, and applied to the above example, the following equation can be obtained.

(Process cycle in which the taught point A5 is identified in Step S6)

D2(56)=D2'(56)=straight-line distance between the taught points A5 and A6

Step S11; based on the modification vector Δ, the third distance information D3 (or D3') and the fourth distance information D4 (or D4'), the modified position of the taught point identified in Step S6 is calculated in the system. The equation is provided below.

Modified position=unmodified position+modification vector Δ*D4/D3 (or D4'/D3'). In some cases, the following equation may be used.

Modified position=unmodified position+modification vector Δ*D4'/D3 (or D4/D3')

If the equation is applied to the above example, the following equations can be obtained. Positions of A5 and B5 are denoted by (xa5, ya5, za5) and (xb5, yb5, zb5), respectively, and the equation of each component will be described below.

$$xb5=xa5+(\triangle x4*D4(56)/D3)$$

$$yb5=ya5+(\triangle y4*D4(56)/D3)$$

$$zb5=za5+(\triangle z4*D4(56)/D3)$$

Herein, D3 and D4(56) may be replaced by D3' and D4'(56), respectively.

Step S12; if n<N-3 is true, it is determined that there remains an unmodified taught point, and the procedure advances to Step S13. If not, it is determined that modification is completed, and the process is terminated. The result is shown on a display on the screen, for example, as illustrated in FIG. 3c.

Step S13; The index n is incremented by 1, and the procedure returns to Step S6 to identify the next unmodified taught point. Thereafter, the process is repeated until the result of judgement in Step S12 is NO.

**[0043]** According to the above-described process, the taught points A2, A3 and A5 located between the taught point A4 modified by the operator (user) and the end points A1 and A6 are grouped into the first-region taught points A2 and A3 and the second-region taught point A5. Moreover, required modification amounts of the taught points A2, A3 and A5 are calculated by prorating the modification vector of the taught point A4 modified by the operator (user) according to the distance information (path distance or straight-line distance) from the end point A1 or A6.

As a numeric example (using the path distance), for instance if the path distance from the end point A1 to the modified point A4 modified by the user is 25 mm, and the path distance from the end point A1 to the intermediate taught point A2 is 15 mm, the intermediate point A2 is modified by the result obtained by multiplying 15/25 (=0.6) by a moving amount of the modified point A4. Likewise, for example in case that the path distance from the modified point A4 modified by the user to the end point A6 is 20 mm, and the path distance from the intermediate taught point A5 to the end point A6 is 10 mm, the intermediate point A5 is modified by the result obtained by multiplying 10/20 (=0.5) by the moving amount of the modified point A4.

The posture is not modified in the present embodiment, and a value of (P, W, R) of each of the taught points is retained after modification. Moreover, in Step S3, the modification of the taught points, which is made by the operator (user), is performed through point movement on the screen, but may be performed through numeric value input instead.

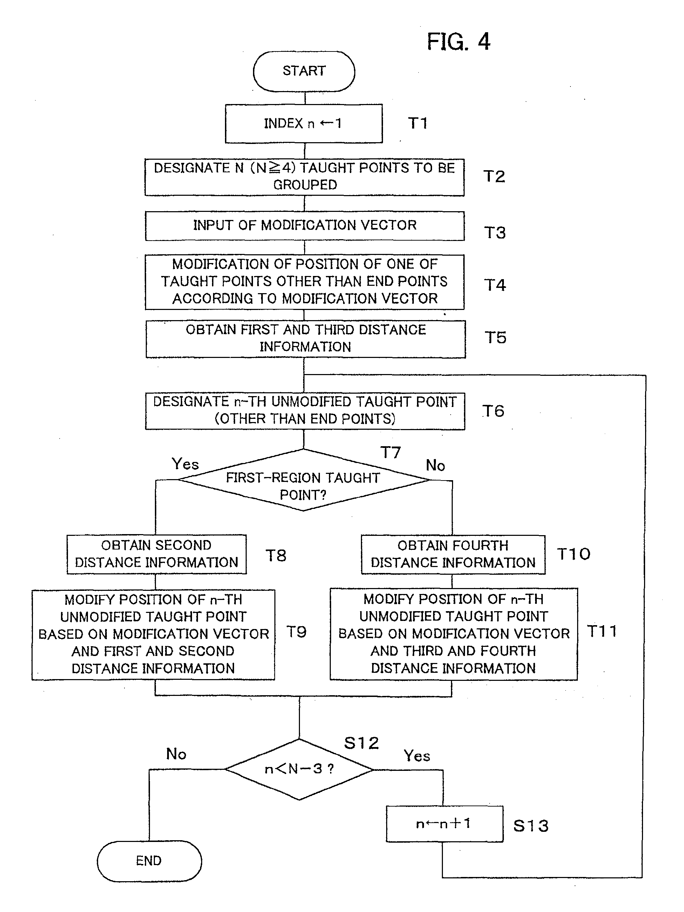

In that case, the position (xb4, yb4, zb4) of the modified taught point (B4 in the above example) may be inputted. Furthermore, it is possible to employ a method in which a modification vector is set (components Δx4, Δy4, and z4 are inputted by using the keyboard or the like) to correspond to a modified taught point of a user selection. The procedure in the above case is shown in FIG. 4 as a second embodiment. Apart from Steps T3 and T4, the second embodiment is identical to the first, so that the gist of each step will be described in an appropriately simplified manner.

Step T1; an index n is initialized into n=1.

Step T2; N sequential taught points to be grouped are designated. Herein, N is an integral number that satisfies N≥4, and the method of the designation is the same as Step S2.

Step T3; with respect to taught point modification that is made in the next Step T4, a component value (each of the component values x, y and z) of a vector (modification vector) indicative of a modification amount is inputted by the operator, for example, using the keyboard.

Step T4; an appropriate taught point is selected among N-2 taught points that remain after end points are excluded from N grouped taught points, to thereby make positional modification in accordance to the modification vector that is set in Step T2. According to the example mentioned in the first embodiment, the taught point A4 is selected from among the six taught points A1 through A6 shown in FIG. 3 a, and the taught point that is modified by the modification vector becomes B4.

Step T5; first distance information D1 or D1' is calculated. The calculation method is the same as the first embodiment.

Step T6; an n-th unmodified taught point is identified among taught points excluding both the end points (the first taught point and the final taught point) and the taught point selected in Step T4. The measurement method is the same as the first embodiment.

Step T7; it is judged in the system whether the taught point identified in Step T6 is a "first-region taught point" or a "second-region taught point". If the point is a first-region taught point, the procedure advances to Step T8. If not, the procedure advances to Step T10.

Step T8; second distance information D2 or D2' is calculated. The calculation method is the same as the first embodiment.

Step T9; based on the modification vector Δ, the first distance information D1 (or D1') and the second distance information D2 (or D2'), a modified position of the taught point identified in Step T6 is calculated in the system. The equation and the like are the same as the first embodiment.

Step T10; fourth distance information D4 or D4' is calculated. The calculation method is the same as the first embodiment.

Step T11; based on the modification vector Δ, the third distance information D3 (or D3') and the fourth distance information D4 (or D4'), a modified position of the taught point identified in Step T6 is calculated in the system. The equation and the like are the same as the first embodiment.

Step T12; if n<N-3 is true, it is judged that there remains an unmodified taught point, and the procedure advances to Step T13. If not, it is judged that modification is completed, and the process is ended. The result is shown on a display on the screen, for example, as illustrated in FIG. 3c.

Step T14; the index n is incremented by 1, and the procedure returns to Step S6 to identify the next unmodified taught point. Thereafter, the process is repeated until the result of judgement in Step T12 is NO.

[0060] In the second embodiment, too, the taught points A2, A3 and A5 located in between the taught point A4 subjected to positional modification according to the modification vector that is set by the operator (user) and the end points A1 and A6 are grouped into the first-region taught points A2 and A3 and the second-region taught point A5. Moreover, required modification amounts of the taught points A2, A3 and A5 are calculated by prorating the modification vector according to distance (path distance or straight-line distance) from the end point A1 or A6.

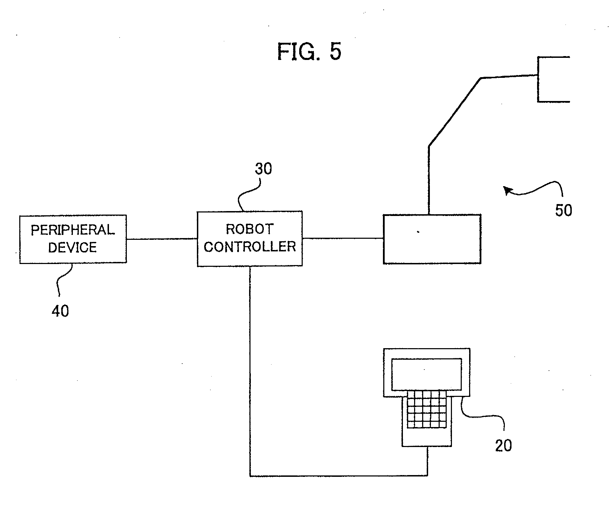

In the first and second embodiments, the offline programming system using the personal computer is utilized. In place thereof, however, a system including a teaching operation panel 20, a robot controller 30 connected to a peripheral device 40 and a robot mechanism 50, as illustrated in FIG. 5 may be utilized.

In that case, the unmodified program is prepared in the robot controller, and the modification on a set of taught points in Steps S2 and T2 is made on the teaching operation panel after the taught path according to the program is called on the teaching operation panel. Furthermore, the selection and positional modification of the intermediate taught points in Step S3 and the setting of the modification vector in Step T3 are also carried out on the teaching operation panel. It is possible to cause the robot controller to perform the calculation process and the like in the other various steps by preliminarily installing software (including programs, parameter values, and so on) therefor in the robot controller.

**Claims**

1. An operation program modification device for modifying positions of taught points set in an operation program for a robot, comprising:

   means for designating at least four sequential taught points among taught points set in the operation program;
   means for modifying a position of one taught point other than a first taught point and a last taught point in the sequential taught points;

means for obtaining a modification vector representing the modification of position of said one taught point;

means for obtaining first distance information from the first taught point to said one taught point before modification in a case where there exists one or more first-region taught points in a first region from the first taught point to said one taught point;

means for obtaining second distance information from the first taught point to each of said first-region taught points along the operation path in the case where there exists one or more first-region taught points;

means for modifying a position of each of said first-region taught points based on the modification vector, the first distance information and the second distance information in the case where there exists one or more first-region taught points;

means for obtaining third distance information between the position of said one taught point before modification and a last taught point along the operation path in a case where there exists one or more second-region taught points in a second region from said one taught point to the last taught point;

means for obtaining fourth distance information between each of said second-region taught points and the last taught point in the case where there exists one or more second-region taught points; and

means for modifying a position of each of said second-region taught points based on the modification vector, the third distance information and the fourth distance information in the case where there exists one or more second-region taught points.

2. An operation program modification device according to claim 1, wherein at least one of said first distance information, said second distance information, said third distance information and said fourth distance information is obtained as a sum of distances between adjacent taught points from said first taught point to said one taught point before modification, as a sum of distances between adjacent taught points from the first taught point to each of the first-region taught points, as a sum of distances between adjacent taught points from said one taught point before modification to said final taught point, and as a sum of distances between adjacent taught points from each of the second-region taught points to the final taught point, respectively.

3. An operation program modification device according to claim 1, wherein at least one of said first distance information, said second distance information, said third distance information and said fourth distance information is obtained as a distance from said first taught point to said one taught point before modification, as a distance from the first taught point to each of the first-region taught points, as a distance from the final taught point to said one taught point before modification, as a distance from each of the second-region taught points to said final taught point, respectively.

4. An operation program modification device for modifying positions of taught points set in an operation program for a robot, comprising:

means for designating at least four sequential taught points among taught points set in the operation program;

means for setting a modification vector;

means for modifying a position of one taught point other than a first taught point and a last taught point in the sequential taught points, according to the modification vector;

means for obtaining first distance information from the first taught point to said one taught point before modification in a case where there exists one or more first-region taught points in a first region from the first taught point to said one taught point;

means for obtaining second distance information from the first taught point to each of said first-region taught points along the operation path in the case where there exists one or more first-region taught points;

means for modifying a position of each of said first-region taught points based on the modification vector, the first distance information and the second distance information in the case where there exists one or more first-region taught points;

means for obtaining third distance information between the position of said one taught point before modification and a last taught point along the operation path in a case where there exists one or more second-region taught points in a second region from said one taught point to the last taught point;

means for obtaining fourth distance information between each of said second-region taught points and the last taught point in the case where there exists one or more second-region taught points; and

means for modifying a position of each of said second-region taught points based on the modification vector, the third distance information and the fourth distance information in the case where there exists one or more second-region taught points.

**5.** An operation program modification device according to claim 4, wherein at least one of said first distance information, said second distance information, said third distance information and said fourth distance information is obtained as a sum of distances between adjacent taught points from said first taught point to said one taught point before modification, as a sum of distances between adjacent taught points from the first taught point to each of the first-region taught points, as a sum of distances between adjacent taught points from said one taught point before modification to said final taught point, and as a sum of distances between adjacent taught points from each of the second-region taught points to the final taught point, respectively.

**6.** An operation program modification device according to claim 4, wherein at least one of said first distance information, said second distance information, said third distance information and said fourth distance information is obtained as a distance from said first taught point to said one taught point before modification, as a distance from the first taught point to each of the first-region taught points, as a distance from the final taught point to said one taught point before modification, as a distance from each of the second-region taught points to said final taught point, respectively.

# FIG.1a

10

# FIG.1b

| DISPLAY | 16 |

GRAPHIC CONTROL CIRCUIT — 15

ROM — 12

KEYBOARD/ MOUSE — 17

CPU — 11

19

RAM — 13

NONVOLATILE MEMORY — 14

COMMUNICATION INTERFACE — 18

**EP 1 531 028 A2**

## FIG. 2

```
                    ┌──────────┐
                    │  START   │
                    └────┬─────┘
                         │
            ┌────────────────────────┐
            │      INDEX n ← 1        │   S1
            └────────────┬───────────┘
                         │
      ┌──────────────────────────────────────┐
      │  DESIGNATION OF N (N≧4) TAUGHT POINTS │   S2
      │          TO BE GROUPED                │
      └──────────────────┬───────────────────┘
                         │
      ┌──────────────────────────────────────┐
      │  MODIFICATION OF POSITION OF ONE OF   │   S3
      │  TAUGHT POINTS OTHER THAN END POINTS  │
      └──────────────────┬───────────────────┘
                         │
      ┌──────────────────────────────────────┐
      │      OBTAIN MODIFICATION VECTOR       │   S4
      └──────────────────┬───────────────────┘
                         │
      ┌──────────────────────────────────────┐
      │    OBTAIN FIRST AND THIRD DISTANCE    │   S5
      │             INFORMATION               │
      └──────────────────┬───────────────────┘
                         │
      ┌──────────────────────────────────────┐
      │  DESIGNATE n-TH UNMODIFIED TAUGHT     │   S6
      │  POINT (OTHER THAN END POINTS)        │
      └──────────────────┬───────────────────┘
                         │
              ┌──────────────────┐      S7
        Yes   │  FIRST-REGION    │   No
       ┌──────┤  TAUGHT POINT?   ├──────┐
       │      └──────────────────┘      │
       │                                │
┌──────────────────┐          ┌──────────────────┐
│  OBTAIN SECOND   │   S8     │  OBTAIN FOURTH   │   S10
│ DISTANCE INFORM. │          │ DISTANCE INFORM. │
└────────┬─────────┘          └────────┬─────────┘
         │                             │
┌──────────────────┐          ┌──────────────────┐
│ MODIFY POSITION  │          │ MODIFY POSITION  │
│ OF n-TH TAUGHT   │   S9     │ OF n-TH TAUGHT   │   S11
│ POINT BASED ON   │          │ POINT BASED ON   │
│ MODIFICATION     │          │ MODIFICATION     │
│ VECTOR AND FIRST │          │ VECTOR AND THIRD │
│ AND SECOND       │          │ AND FOURTH       │
│ DISTANCE INFORM. │          │ DISTANCE INFORM. │
└────────┬─────────┘          └────────┬─────────┘
         │                             │
         └──────────────┬──────────────┘
                        │
                ┌──────────────┐      S12
          No    │  n < N - 3 ? │   Yes
         ┌──────┤              ├──────┐
         │      └──────────────┘      │
         │                            │
   ┌──────────┐                ┌──────────────┐
   │   END    │                │   n ← n + 1  │   S13
   └──────────┘                └──────────────┘
```

FIG.3a

FIG.3b

FIG.3c

EP 1 531 028 A2

# FIG. 4

```
        ( START )
            │
   ┌─────────────────┐
   │   INDEX n ←1    │  T1
   └─────────────────┘
            │
   ┌──────────────────────────────────┐
   │ DESIGNATE N (N≧4) TAUGHT POINTS  │  T2
   │           TO BE GROUPED          │
   └──────────────────────────────────┘
            │
   ┌──────────────────────────────────┐
   │    INPUT OF MODIFICATION VECTOR  │  T3
   └──────────────────────────────────┘
            │
   ┌──────────────────────────────────┐
   │ MODIFICATION OF POSITION OF ONE  │
   │ OF TAUGHT POINTS OTHER THAN END  │  T4
   │ POINTS ACCORDING TO MODIFICATION │
   │             VECTOR               │
   └──────────────────────────────────┘
            │
   ┌──────────────────────────────────┐
   │  OBTAIN FIRST AND THIRD DISTANCE │  T5
   │           INFORMATION            │
   └──────────────────────────────────┘
            │
   ┌──────────────────────────────────┐
   │ DESIGNATE n-TH UNMODIFIED TAUGHT │  T6
   │   POINT (OTHER THAN END POINTS)  │
   └──────────────────────────────────┘
            │
     Yes    ◇ T7    No
   ┌────< FIRST-REGION >────┐
   │      TAUGHT POINT?      │
   │                         │
┌──────────────┐      ┌──────────────┐
│OBTAIN SECOND │      │OBTAIN FOURTH │
│   DISTANCE   │ T8   │   DISTANCE   │ T10
│ INFORMATION  │      │ INFORMATION  │
└──────────────┘      └──────────────┘
   │                         │
┌────────────────┐    ┌────────────────┐
│MODIFY POSITION │    │MODIFY POSITION │
│OF n-TH         │    │OF n-TH         │
│UNMODIFIED      │ T9 │UNMODIFIED      │ T11
│TAUGHT POINT    │    │TAUGHT POINT    │
│BASED ON        │    │BASED ON        │
│MODIFICATION    │    │MODIFICATION    │
│VECTOR AND FIRST│    │VECTOR AND THIRD│
│AND SECOND      │    │AND FOURTH      │
│DISTANCE INFO   │    │DISTANCE INFO   │
└────────────────┘    └────────────────┘
          │                 │
          └────────┬────────┘
                   │
          No    ◇ S12    Yes
        ┌────< n<N-3 ? >────┐
        │                   │
        │              ┌──────────┐
        │              │  n←n+1   │ S13
        │              └──────────┘
     ( END )               │
                           
```

FIG. 5